# EUROPÄISCHE PATENTSCHRIFT

(11) **EP 2 718 672 B1**
(45) Veröffentlichungstag und Bekanntmachung des Hinweises auf die Patenterteilung: **06.02.2019**
(21) Anmeldenummer: 12727596.4
(22) Anmeldetag: 11.06.2012
(51) Int. Cl.: G01C 21/36, G06F 3/0484, G06F 3/0482

(54) **VERFAHREN UND VORRICHTUNG ZUM BEREITSTELLEN EINER NUTZERSCHNITTSTELLE**
METHOD AND APPARATUS FOR PROVIDING A USER INTERFACE
PROCÉDÉ ET DISPOSITIF POUR LA PRÉPARATION D'UNE INTERFACE UTILISATEUR

(30) Priorität: 10.06.2011 DE 102011103869
(43) Veröffentlichungstag der Anmeldung: 16.04.2014
(73) Patentinhaber: Volkswagen Aktiengesellschaft, 38436 Wolfsburg (DE)
(72) Erfinder: STRUHS, Stefan, 38118 Braunschweig (DE); PLESCHKA, Mark, 10781 Berlin (DE); MEYER, Oliver, 85051 Ingolstadt (DE); SCHULZ, Stefan, 10965 Berlin (DE); FEDERAU, Silvio, 14057 Berlin (DE)
(74) Vertreter: Rabe, Andreas
(86) Internationale Anmeldenummer: PCT/EP2012/002474
(87) Internationale Veröffentlichungsnummer: WO 2012/167952

(56) Entgegenhaltungen:
- WO-A1-2010/057531
- DE-A1- 19 929 425

## Beschreibung

Die vorliegende Erfindung betrifft ein Verfahren zum Bereitstellen einer Nutzerschnittstelle, bei dem eine Menge von datentechnisch gespeicherten Objekten als Suchergebnisse ermittelt wird und die Objekte in einer sequentiellen Liste angezeigt werden. Bei dem Verfahren werden des Weiteren die Objekte zusätzlich zu der sequentiellen Liste in einer graphischen Darstellung angezeigt, wobei den Objekten jeweils eine Position in der graphischen Darstellung zugeordnet wird, in Abhängigkeit derer die Objekte in der graphischen Darstellung angezeigt werden. Anschließend an das Anzeigen der Objekte in der sequentiellen Liste und in der graphischen Darstellung wird durch eine erste Bedienaktion eine Position in der graphischen Darstellung ausgewählt und in Abhängigkeit von der ausgewählten Position wird eine Teilmenge aus der angezeigten Menge der Objekte in der sequentiellen Liste ausgewählt. Die vorliegende Erfindung betrifft ferner eine dazugehörige Vorrichtung zum Bereitstellen einer solchen Nutzerschnittstelle, insbesondere in einem Fahrzeug.

Derartige Nutzerschnittstellen werden für Suchfunktionen auf graphischen Nutzeroberflächen verwendet. Dabei erleichtert die Anzeige der Objekte mit Bezug zu einer graphische Darstellung eine grobe Orientierung für den Nutzer, wenn eine Vielzahl von Suchergebnissen ermittelt wurden, wobei die Anzeige der Objekte in einer sequentiellen Liste die Handhabung bei der konkreten Auswahl des gesuchten Objekts vereinfacht, wenn die Menge der Suchergebnisse erst einmal eingeschränkt wurde.

Eine gattungsgemäße Nutzerschnittstelle eignet sich insbesondere für den Einsatz in Navigationssystemen, um mehrdeutige Suchergebnisse, z.B. Navigationsziele oder Sonderziele in der Nähe einer Navigationsroute, zu visualisieren und damit dem Nutzer die konkrete Auswahl zu erleichtern. Sie kann beispielsweise auch für die Suche von Hotels oder Restaurants in einer Stadt oder Region benutzt werden, wobei durch die positionsgebundene Darstellung der Suchergebnisse in einer Karte dem Nutzer die Orientierung erleichtert wird und er seine Suche schnell auf gewünschte Bezirke oder Stadtviertel einschränken kann. Sie können aber ferner auch für andere kartenbasierte Suchprogramme oder Suchprogramme mit einer visuellen Orientierungshilfe verwendet werden, wie z.B. bei der Sendersuche eines Radiosenders, bei dem die Frequenzleiste als graphische Orientierungshilfe dient.

Das Problem der mehrdeutigen Suchergebnisse kann dabei aus einer eindeutigen Sucheingabe mit mehreren Treffern oder aber auch aus einer nicht eindeutigen Sucheingabe mit systemseitigen Treffervorschlägen entstehen.

In einem Fahrzeug treten beide der obengenannten Probleme wiederkehrend auf, weshalb die vorliegende Erfindung vorteilhafterweise in einem Fahrzeug eingesetzt wird. Insbesondere kommt es zu langwierigen Bedienaktionen bei der Auswahl und/oder Bestätigung von Navigationszielen, die vom Fahrer als lästig empfunden werden. Auch kann es im Fahrzeug durch Fahrzeugvibrationen zu fehlerhaften Sucheingaben über eine Tastatur kommen oder systemseitig wegen des erhöhten Geräuschpegels Sucheingaben über eine Sprachschnittstelle fehlerhaft erfasst werden. Des Weiteren muss in einem Fahrzeug berücksichtigt werden, dass eine Bedienaktion über die Nutzerschnittstelle möglichst komfortabel durchzuführen ist, damit der Fahrer bei der Bedienaktion nicht vom Straßenverkehr abgelenkt wird.

Bei der positionsgetreuen Darstellung von Objekten in einer Karte hat sich unter ungünstigen Umständen als problematisch herausgestellt, dass einerseits die darzustellenden Objekte an vielen Positionen derart verstreut auf der Karte dargestellt werden, dass der Nutzer wenig Orientierung erhält, andererseits einige dieser Objekte sehr dicht nebeneinander liegen.

In der DE 10 2008 008 948 A1 wird eine Systemarchitektur und ein Verfahren zur multimodalen Informationseingabe beschrieben. Dabei können zu einer Informationsanzeige Informationsinhalte verändert oder Funktionen aufgerufen werden, indem Teile einer strukturierten Mehrworteingabe mittels verschiedener Modalitäten, insbesondere über Sprache, Tastatur und Gesten eingegeben werden. Auf diese Weise kann jede Teilinformation über die geeignetste Modalität eingegeben werden, damit systemseitig die Treffermenge zu der gewünschten Eingabe effektiv eingeschränkt werden kann. Als Anwendungen werden insbesondere die Auswahl eines Navigationsziels oder eines Musiktitels genannt.

Die DE 199 29 425 A1 beschreibt ein Verfahren zur Auswahl eines Navigationsziels. Dabei wird eine Liste mit Navigationszielen erzeugt und aus einer geographischen Karte einer von mehreren vorab definierten Kartenausschnitten ausgewählt, sodass die angezeigte Treffermenge in der Liste reduziert werden kann. Die zu dem Kartenausschnitt gehörigen Navigationsziele in der Liste können optional in dem Kartenausschnitt markiert werden. Das gewünschte Navigationsziel kann aus dem Kartenausschnitt oder aus der Liste ausgewählt werden.

In der WO 03/100351 wird ein Verfahren zur Eingabe von Ortsnamen beschrieben. Für den Fall, dass die Eingabe wenigstens zwei Ortsnamen zugeordnet werden kann, wird mindestens eine diese Orte kennzeichnende Graphik zur Auswahl einer der beiden Orte angezeigt. Eine solche Graphik umfasst z.B. zu dem jeweiligen Ort gehörige Sehenswürdigkeiten oder Wappen, um eine leichte visuelle Differenzierung zu ermöglichen.

Es ist die Aufgabe der vorliegenden Erfindung ein Verfahren und eine Vorrichtung der eingangs genannten Art anzugeben, bei denen eine komfortable und intuitive Bedienung zur Auswahl eines Objekts aus einer Vielzahl von Suchergebnissen ermöglicht wird.

Diese Aufgabe wird erfindungsgemäß durch ein Verfahren mit den Merkmalen des Anspruchs 1 sowie einer Vorrichtung mit den Merkmalen des Anspruchs 9 gelöst. Vorteilhafte Aus- und Weiterbildungen ergeben sich aus den abhängigen Ansprüchen.

Bei dem erfindungsgemäßen Verfahren wird den Positionen in der graphischen Darstellung eine Metrik zugeordnet, sodass zwischen zwei Positionen ein Abstandsmaß ermittelbar ist, und ein Objekt wird in Abhängigkeit von dem Abstandsmaß zwischen der zum jeweiligen Objekt gehörigen Position und der ausgewählten Position in die Teilmenge aufgenommen. Dabei wird ein Objekt in die Teilmenge aufgenommen, wenn das Abstandsmaß kleiner ist als ein vorgegebener Grenzwert, wobei die Teilmenge auf einen Bereich um die ausgewählte Position eingeschränkt wird. Diese Auswahl der Teilmenge ist besonders intuitiv, weil der Nutzer sich nur auf einem ihm visuell leicht aufzufindenden Punkt der graphischen Darstellung konzentrieren muss. Er muss keinen Bereich der graphischen Darstellung auswählen. Dieser kann in Abhängigkeit von der Metrik der Positionen systemseitig automatisch ermittelt werden. Auch entfällt das lästige Suchen durch Umblättern oder Scrollen in einer sequentiellen Liste. Ferner ist es nicht erforderlich, ein bestimmtes graphische dargestelltes Objekt genau zu treffen.

Die graphische Darstellung ist dabei typischerweise eine räumliche Visualisierung von Daten. Sie kann insbesondere zweidimensional einfach auf einer Anzeigefläche dargestellt werden. Sie kann aber auch durch die Darstellung virtueller Ebenen einen dreidimensionalen Raum darstellen oder durch topologische Untermengen dieses Raumes gebildet werden, z.B. durch eine Linie auf einer Fläche.

Eine sequentielle Liste ist im Sinne der Erfindung eine Anordnung von Objekten, deren Parameter zur Anordnung durch eine fortlaufende Ordnungsnummer bestimmt ist. Die sequentielle Liste ist beispielsweise eine tabellarische Aufstellung oder Aufzählung, bei denen die aufgezählten Objekte in äquidistanten Abständen angezeigt werden, unabhängig von den eigentlichen Objekteigenschaften wie z.B. den Objekten zugeordneten Positionen. Es kann eine Liste mit Texteinträgen sein oder eine Liste mit Symbolen, die die jeweiligen Objekte symbolisieren. Es handelt sich z.B. um eine an sich bekannte Darstellung von Dateistrukturen, wie diese im Gebiet der Datenverarbeitung geläufig sind, beispielsweise sogenannte Icon-Listen, Thumbnails oder Vorschaulisten.

Erfindungsgemäß wird ein Objekt in die Teilmenge aufgenommen, wenn das Abstandsmaß kleiner als ein vorgegebener Grenzwert ist. Auf diese Weise kann die Teilmenge schnell auf einen Bereich um die ausgewählte Position eingeschränkt werden.

In einer Ausgestaltung des erfindungsgemäßen Verfahrens ist vorgesehen, dass die Objekte in aufsteigender Reihenfolge des Abstandsmaßes zwischen der Position des Objekts und der ausgewählten Position in die Teilmenge aufgenommen werden, bis eine vorgegebene Anzahl erreicht wird. Hierdurch kann die Teilmenge der Suchergebnisse auf ein vorab bestimmtes Maß, z.B. einer Anzahl zwischen drei und zehn, beschränkt werden, sodass die auf Basis dieser Teilmenge angezeigte sequentielle Liste handhabbar wird.

Die sequentielle Liste kann dann auf eine beliebige Art sortiert angezeigt werden. Nachdem die Auswahl in der graphischen Darstellung über die zugrunde liegende Metrik am intuitivsten ist, kann die sequentielle Liste nach der Auswahl der Teilmenge insbesondere alphabetisch sortiert angezeigt werden. Während die Handhabung größerer sequentieller Listen in alphabetischer Reihenfolge einen beträchtlichen Suchaufwand durch Blättern oder Scrollen verursachen kann, ist die Handhabung einer kürzeren sequentiellen Liste in alphabetischer Reihenfolge gegebenenfalls einfacher als eine nach dem Abstandsmaß sortierte sequentielle Liste, weil in der sequentiellen Liste das Abstandsmaß den intuitiven Bezug zu der graphischen Darstellung verliert.

In einer Ausgestaltung des erfindungsgemäßen Verfahrens ist vorgesehen, dass der Darstellungsmaßstab der graphischen Darstellung automatisch an die Teilmenge der Objekte angepasst wird. Es kann z.B. eine automatische Skalierung, insbesondere eine Vergrößerung der Karte durchgeführt werden, die die graphische Darstellung visuell optimiert. Dadurch können gegebenenfalls sehr dicht beieinander liegende Objekte entzerrt dargestellt werden. Das neue Zentrum der graphischen Anzeige ist typischerweise die ausgewählte Position. Eine Anpassung der graphischen Darstellung an die Teilmenge der Objekte kann ferner auch eine Neuzentrierung der graphischen Darstellung umfassen. Dies ist insbesondere dann zweckmäßig, wenn die Teilmenge der Objekte tendenziell in einer Richtung von der ausgewählten Position liegen.

Die zuletzt genannten Verfahrensschritte können auch in einem mehrstufigen Iterationsprozess durchgeführt werden. Beispielsweise wird auf eine Bedienaktion zur Auswahl einer Position auf der graphischen Darstellung zunächst eine relativ große Anzahl von Objekten in eine erste Teilmenge aufgenommen und in einem nachfolgenden Schritt die graphische Darstellung an diese erste Teilmenge angepasst. In einer zweiten Iteration oder weiteren Iterationen kann der Nutzer durch eine zweite Bedienaktion oder weitere Bedienaktionen die ausgewählte Position korrigieren bzw. präzisieren, bis die so erhaltene zweite Teilmenge oder weitere Teilmengen derart in der Anzahl eingeschränkt werden können, dass eine Handhabung über die sequentielle Liste bequem und einfach wird.

Erfindungsgemäß kann nun, nachdem durch die erste Bedienaktion in der graphischen Darstellung eine Position ausgewählt wurde, in der sequentiellen Liste durch eine zweite Bedienaktion ein angezeigtes Objekt der Teilmenge ausgewählt werden. Die Auswahl in einer kurzen sequentiellen Liste kann je nach Rahmenbedingungen einfacher und schneller erfolgen, als eine Auswahl in einer graphischen Darstellung. Die sequentielle Liste kann dabei auf andere Parameter oder Attribute des Objekts fokussiert sein, als dies bei einer graphischen Darstellung der Fall ist. In der graphischen Darstellung kann vorteilhafterweise eine Position oder eine Visualisierung einer Objektklasse z.B. in Form von Symbolen für eine gute Übersicht und eine intuitive Bedienung sorgen. Aufgrund der Darstellung, die nicht an vorab feste Positionen geknüpft ist, sondern diese Positionen erst als Objektparameter bestimmt werden, ist diese Art der Darstellung aber in der Regel nicht räumlich optimiert. Bei einer sequentiellen Liste können hingegen eine Vielzahl von das entsprechende Objekt betreffende Informationen kompakt dargestellt werden, sodass dem Nutzer durch die zusätzliche Information die Auswahl aus einer solchen Liste leichter fällt.

Das Verfahren lässt sich auf eine Vielzahl von Such- und Auswahlprogrammen anwenden. Insbesondere können die Objekte Navigationsziele eines Navigationssystems oder Auswahlobjekte einer Infotainmentanwendung in einem Fahrzeug sein. Es sind aber auch Anwendungen möglich, bei denen Objekte in Abhängigkeit mehrerer Parameter, z.B. Preis, Dauer oder Menge, gesucht werden sollen, beispielsweise zur Suche von Immobilien oder zum Buchen von Reisen. Das Abstandsmaß kann vorteilhafterweise eine Distanz und/oder eine berechnete Fahrzeit umfassen. Der Abstand kann dabei eine geographische Distanz (Luftlinie) oder eine verkehrstechnische Distanz, z.B. entsprechend einem definierten Wegenetz und/oder Fahrplan sein. Insbesondere können auch mehrere dieser Parameter in das Abstandsmaß einbezogen werden.

In einer Ausgestaltung des erfindungsgemäßen Verfahrens werden die graphische Darstellung und/oder die sequentielle Liste auf einer berührungsempfindlichen Anzeigefläche dargestellt und es wird die erste und/oder die zweite Bedienaktion durch Berühren der Anzeigefläche in dem Bereich ausgeführt, in welchem jeweils die graphische Darstellung oder die sequentielle Liste angezeigt wird. Die Verwendung von berührungsempfindlichen Anzeigeflächen, auch als Touchscreen bezeichnet, gestalten die Bedienung für den Nutzer noch komfortabler. Alternativ kann die Auswahl aber beispielsweise auch über eine Maus, einen Cursor oder etwa einen Joystick erfolgen.

Die erfindungsgemäße Vorrichtung zum Bereitstellen einer Nutzerschnittstelle umfasst einen Datenspeicher zum Speichern einer Menge von als Suchergebnisse ermittelten Objekten, eine Anzeigefläche zum Anzeigen graphischer Darstellungen und sequentieller Listen sowie Eingabemittel zum Erfassen einer Bedienaktion zur Auswahl einer Position auf der Anzeigefläche. Die erfindungsgemäße Vorrichtung umfasst des Weiteren eine Steuereinheit, die mit dem Datenspeicher, der Anzeigefläche und den Eingabemitteln verbunden ist. Dabei ist die Steuereinheit dazu eingerichtet, die Anzeigefläche zum Anzeigen der Objekte in einer sequentiellen Liste und zusätzlich in einer graphischen Darstellung anzusteuern und anschließend die Eingabemittel zum Erfassen der Bedienaktion anzusteuern. Dabei ist mittels der Steuereinheit den Objekten jeweils eine Position in der graphischen Darstellung zuordenbar, in Abhängigkeit derer die Objekte in der graphischen Darstellung anzeigbar sind, und in Abhängigkeit von der ausgewählten Position ist eine Teilmenge aus der angezeigten Menge der Objekte in der sequentiellen Liste auswählbar. Dabei ist mittels der Steuereinheit den Positionen in der graphischen Darstellung eine Metrik zuordenbar, sodass zwischen zwei Positionen ein Abstandsmaß ermittelbar ist, und ein Objekt ist in Abhängigkeit von dem Abstandsmaß zwischen der zum jeweiligen Objekt gehörigen Position und der ausgewählten Position in die Teilmenge aufnehmbar. Dabei ist ein Objekt in die Teilmenge aufnehmbar, wenn das Abstandsmaß kleiner als ein vorgegebener Grenzwert ist, wobei die Teilmenge auf einen Bereich um die ausgewählte Position eingeschränkt wird. Die erfindungsgemäße Vorrichtung ist insbesondere zum Durchführen des erfindungsgemäßen Verfahrens geeignet. Sie weist somit auch die Vorteile des erfindungsgemäßen Verfahrens auf.

Die Eingabemittel können auf verschiedene Weise realisiert sein. Sie können als berührungsempfindliche Oberfläche auf der Anzeigefläche ausgestaltet sein, so dass die graphische Darstellung und/oder die sequentielle Liste über einen Touchscreen bedient werden kann. Alternativ oder auch zusätzlich können andere Eingabemittel zur Verfügung gestellt werden, wie beispielsweise Drehdrücksteller, mehrdirektionale Wippschalter, ein Touchpad, der auch über eine berührungsempfindliche Oberfläche verfügt, aber räumlich getrennt von der Anzeigefläche ist, eine Maus oder ein Joystick.

Erfindungsgemäß ist des Weiteren ein Fahrzeug mit einer solchen Vorrichtung zum Bereitstellen einer Nutzerschnittstelle ausgestattet.

Die Erfindung wird nun anhand von Ausführungsbeispielen mit Bezug zu den Figuren näher erläutert.
- Figur 1: zeigt eine Ansicht eines Cockpits eines Fahrzeugs mit einer Vorrichtung zum Bereitstellen einer Nutzerschnittstelle gemäß einem Ausführungsbeispiel der Erfindung,
- Figur 2: zeigt schematisch den Prinzipaufbau einer Vorrichtung zum Bereitstellen einer Nutzerschnittstelle gemäß einem Ausführungsbeispiel der Erfindung,
- Figur 3A: zeigt eine graphische Darstellung und eine sequentielle Liste auf einer Anzeigefläche während der Auswahl einer Position in der graphischen Darstellung gemäß einem Ausführungsbeispiel der Erfindung und
- Figur 3B: zeigt die Anzeigeinhalte der in der Figur 3A dargestellten Anzeigefläche nach der Auswahl einer Position in der graphischen Darstellung gemäß einem Ausführungsbeispiel der Erfindung.

In den folgenden Ausführungsbeispielen werden Anwendungen der Erfindung für ein Navigationssystem 2 in einem Fahrzeug 1 beschrieben. Die Erfindung kann aber für weitere Funktionseinheiten im Fahrzeug 1 oder auch in stationären Systemen ohne Bezug zu einem Fahrzeug verwendet werden. Die Erfindung kann für alle technischen Gebiete verwendet werden, in welchen graphische Nutzeroberflächen, insbesondere Suchmaschinen mit langen Trefferlisten eingesetzt werden. Die Erfindung ist vorteilhaft, wenn ein Nutzer aus einer langen Liste einen Eintrag auswählen soll und die Einträge selber mit einer graphischen Darstellung in Verbindung gebrach werden können. Solche graphischen Darstellungen sind nicht nur Landkarten, bei denen die geographische Position den Bezug zur graphischen Darstellung herstellt, sondern auch graphische Darstellungen in Abhängigkeit von beliebigen Parametern z.B. eine Frequenzleiste zum Auswählen eines Radiosenders.

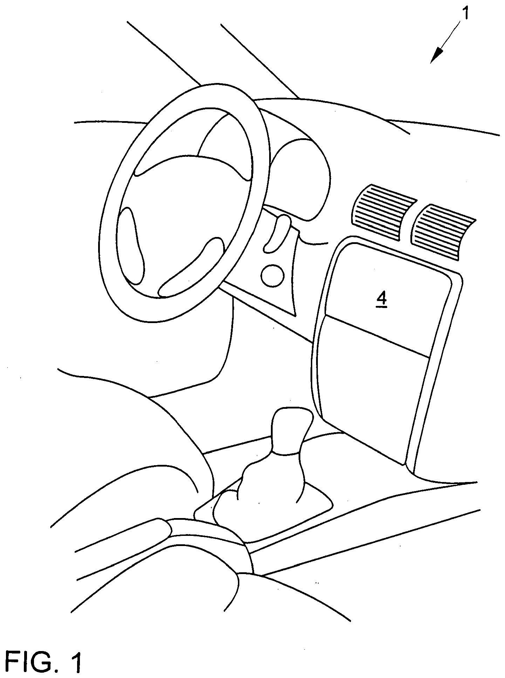

In der Figur 1 ist ein Cockpit eines Fahrzeugs 1 dargestellt, das mit einer Vorrichtung zum Bereitstellen einer Nutzerschnittstelle gemäß einem Ausführungsbeispiel der Erfindung ausgestattet ist. Eine Anzeigefläche 4 ist im oberen Bereich der Mittelkonsole angeordnet, sodass sie von Fahrer und Beifahrer gut eingesehen und ggf. bedient werden kann.

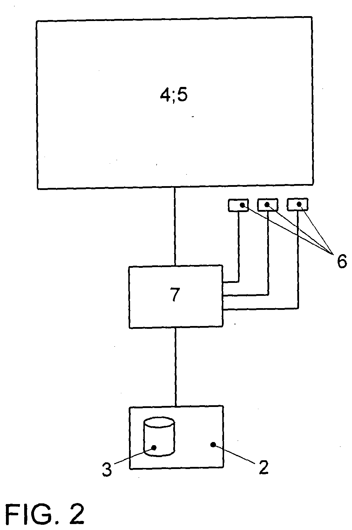

In der Figur 2 ist schematisch der Aufbau einer solchen Vorrichtung zum Bereitstellen einer Nutzerschnittstelle in einem Fahrzeug 1 dargestellt. Die Anzeigefläche 4 ist im gezeigten Beispiel als Touchscreen ausgestaltet und verfügt als Eingabemittel über eine berührungsempfindliche Oberfläche 5. Auf diese Weise kann eine Bedienaktion durch Berühren der auf der Anzeigefläche 4 dargestellten Anzeigeinhalte erfasst werden. Alternativ oder auch zusätzlich können weitere Eingabemittel 6 vorgesehen sein, wie z.B. Tastschalter, Drehdrücksteller oder sogenannte Touchpads, die in der Nähe der Anzeigefläche 4 oder an geeigneter Position angebracht sind, sodass sie leicht vom Fahrer oder Beifahrer bedient werden können. Über die berührungsempfindliche Oberfläche 5 und/oder die weiteren Eingabemittel 6 können insbesondere Bedienaktionen erfasst werden, wie diese weiter unten noch in Zusammenhang mit dem erfindungsgemäßen Verfahren näher erläutert werden.

Die Anzeigefläche 4 sowie die verschiedenen Eingabemittel 5, 6 sind mit einer Steuereinheit 7 verbunden, die wiederum mit einem Navigationssystem 2 oder weiteren Funktionseinheiten (nicht dargestellt) verbunden ist. Das Navigationssystem 2 umfasst einen Datenspeicher 3, in dem eine Menge von Objekten 11A - 11E, 11A' - 11E', 11X datentechnisch gespeichert ist.

Die Objekte 11A - 11E, 11A' - 11E', 11X sind einer Kategorie von Navigationsdaten zugeordnet. Es sind beispielsweise Städte bzw. Dörfer. Es können aber auch z.B. Sonderziele sein, beispielsweise Bahnhöfe, Einkaufs-Center, Sportanlagen, Restaurants und dergleichen, wobei die Objekte auch untereinander verknüpft sein können (z.B. Stadt mit Bahnhof). Den Objekten 11A - 11E, 11A' - 11E', 11X sind eine Reihe von Attributen zugeordnet, die ebenfalls im Datenspeicher 3 gespeichert sind. Diese Attribute umfassen z.B. Ortsname, Straßenname, Postleitzahl, Landkreis und Bundesland. Ein Objekt kann auch einer bestimmten Kategorie zugeordnet sein, z.B. ob es sich um ein Dorf oder um eine Großstadt handelt. Den Objekten 11A - 11E, 11A' - 11E', 11X sind des Weiteren jeweils eine geographische Position zugeordnet, mithilfe derer sie an den ihnen zugeordneten Positionen in einer Landkarte 8 auf der Anzeigefläche 4 angezeigt werden können, wie dies weiter unten noch im Zusammenhang mit dem erfindungsgemäßen Verfahren näher erläutert wird.

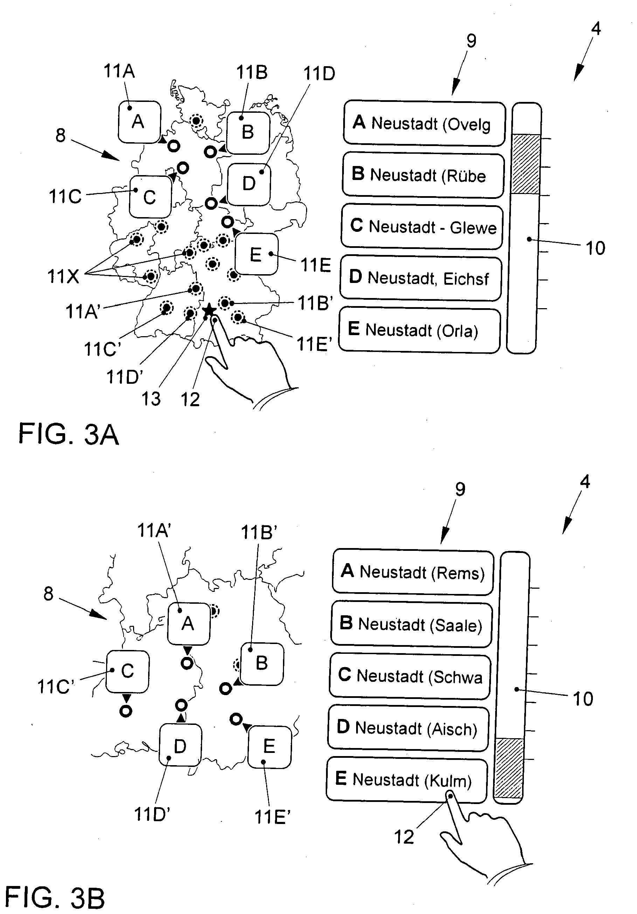

Das erfindungsgemäße Verfahren wird nun anhand eines Ausführungsbeispiels mit Bezug zu den Figuren 3A und 3B beschrieben. Dazu kann insbesondere die mit Bezug zu der Figur 2 beschriebene erfindungsgemäße Vorrichtung verwendet werden. In der Figur 3A ist eine Landkarte 8 und eine Textliste 9 auf einer Anzeigefläche 4 dargestellt, während eine Auswahlposition 13 in der Landkarte 8 gemäß einem Ausführungsbeispiel der Erfindung ausgewählt wird. Die Figur 3B zeigt die nach dem Auswählen der Auswahlposition 13 erhaltenen Anzeigeinhalte mit einer weiteren Bedienaktion, die über die Textliste 9 durchgeführt wird.

Ein Nutzer suche eine Navigationsroute nach "Neustadt". Dazu gebe er auf an sich bekannte Weise den Suchbegriff "Neustadt" über die berührungsempfindliche Oberfläche 5 des Touchscreens oder über andere Eingabemittel 6 ein. Er gibt die entsprechende Buchstabenfolge ganz oder zumindest teilweise z.B. über eine Tastatur oder über ein Auswahlmenü ein. Alternativ kann die Eingabe auch per Sprachbefehl erfolgen, wenn die Nutzerschnittstelle entsprechend multimodal mit einer Sprachschnittstelle ausgerüstet ist.

Als Ergebnis werden ihm nun eine Menge von Objekten 11A - 11E, 11A' - 11E', 11X als Suchergebnisse ermittelt. Die gegebenenfalls große Anzahl an Suchergebnissen kann sich auf vielerlei Art ergeben haben: Ein tatsächlich mehr- oder vieldeutiger Suchbegriff, eine unvollständige Eingabe, eine fehlerhafte Eingabe oder etwa eine systemseitig fehlerhaft erfasste Eingabe. Die Menge von Objekten 11A - 11E, 11A' - 11E', 11X werden in einer Textliste 9 sowie in Abhängigkeit der den Objekten 11A - 11E, 11A' - 11E', 11X jeweils zugeordneten Positionen in einer Landkarte 8 auf der Anzeigefläche 4 angezeigt, wie dies in der Figur 3A dargestellt ist.

Die Objekte 11A - 11 E, 11A' - 11E', 11X müssen dabei nicht an exakt den den Objekten zugeordneten Positionen dargestellt werden. Aufgrund der endlichen Größe und möglichen Überlappungen können die Objekte 11A - 11E, 11A' - 11E', 11X auch in einem Bereich um die entsprechende Position angezeigt werden. Ferner müssen nicht alle Objekte 11A - 11E, 11A' - 11E', 11X in der Textliste 9 unmittelbar sichtbar sein. Bei einer größeren Anzahl ist es zweckmäßig, die Textliste 9 nur teilweise anzuzeigen, indem die Textliste 9 beispielsweise nur über eine begrenzte Anzahl von Einträgen, z.B. fünf verfügt. Mithilfe einer Bildlaufleiste 10 oder Schaltflächen zum Umblättern (nicht dargestellt) kann der Nutzer dann in der Textliste 9 blättern und den gewünschten Eintrag suchen. Die Objekte 11A - 11E, die in der momentanen Anzeige in der Textliste 9 sichtbar sind, können in der Landkarte 8 gegenüber den übrigen Objekten 11A' - 11E', 11X hervorgehoben dargestellt werden.

Weil das Blättern in einer langen Textliste 9 mühsam ist, kann der Nutzer nun erfindungsgemäß durch eine erste Bedienaktion eine Auswahlposition 13 in der Landkarte 8 auswählen. Er berührt z.B. mit seinem Finger 12 die Anzeigefläche 4, in der die entsprechenden Position 13 angezeigt wird.

Dazu wird erfindungsgemäß mittels der Steuereinheit 7 den Positionen in der Landkarte 8 eine Metrik zugeordnet, sodass zwischen zwei Positionen ein Abstandsmaß ermittelbar ist. Es werden sodann nacheinander eines der Objekte 11A - 11E, 11A' - 11E', 11X in Abhängigkeit von dem Abstandsmaß zwischen der zum jeweiligen Objekt 11A - 11E, 11A' - 11E', 11X gehörigen Position und der Auswahlposition 13 in eine Teilmenge 11A' - 11E' aufgenommen. Das Abstandsmaß wird in diesem Fall aus der geographischen Distanz zwischen den jeweiligen Positionen gebildet. Alternativ kann das Abstandsmaß auch aus einer berechneten Fahrzeit gebildet werden, die das Fahrzeug 1 von der Auswahlposition 13 zu den den Objekten 11A - 11 E, 11A'-11E', 11X zugeordneten Positionen benötigen würde.

Die Objekte 11A' - 11E' werden beispielsweise sukzessive in aufsteigender Reihenfolge des Abstandsmaßes zwischen der Position des Objekts 11A - 11E, 11A' - 11E', 11X und der ausgewählten Position in die Teilmenge aufgenommen, wenn das Abstandsmaß kleiner als ein vorgegebener Grenzwert ist, z.B. innerhalb eines Radius von 50 km um die Auswahlposition 13, oder bis eine vorgegebene Anzahl erreicht wird. Diese Anzahl muss nicht dieselbe Anzahl sein wie die in der Textliste 9 der Figur 3A.

In Abhängigkeit von der ausgewählten Position 13 wird nun die Teilmenge 11A' - 11E' aus der angezeigten Menge der Objekte 11A - 11E, 11A' - 11E', 11X in der Landkarte 8 hervorgehoben dargestellt. Dabei wird der Darstellungsmaßstab der Landkarte 8 automatisch an die neue Teilmenge 11A' - 11E' angepasst und der Kartenausschnitt vergrößert dargestellt. Außerdem wird die Anzeige der Textliste 9 an diese Auswahl angepasst, sodass dort nun diese vorgegebene Anzahl von Einträgen angezeigt werden, wie dies in der Figur 3B dargestellt ist.

Die neue Darstellung auf der Anzeigefläche 4 erleichtert nun die weitere Bedienung über die Textliste 9. Die Textliste 9 kann weiterhin in einer geographischen Sortierung angezeigt werden. Alternativ kann die Anzeige der Textliste 9 aber auch nach einer anderen Sortierung erfolgen, z.B. alphabetisch oder nach einem anderen den Objekten 11A' - 11E' zugeordneten Parameter oder Attribut, z.B. nach der Größe der Stadt. Eine alphabetische Anzeige hat den Vorteil, dass sich der Nutzer durch den Textbezug nun gegebenenfalls leichter an einer alphabetischen Sortierung als an einer geographischen Sortierung orientieren kann.

Der Nutzer kann nun durch eine zweite Bedienaktion das angezeigte Objekt 11E' in der Textliste 9 auswählen, indem er mit seinem Finger 12 den entsprechenden Bereich auf der Anzeigefläche 4 berührt.

Das Verfahren kann auch iterativ durchgeführt werden, indem in einem mehrstufigen Auswahlverfahren mehrmals eine Auswahlposition 13 ausgewählt wird, über die die Menge an Objekten 11A - 11E, 11A' - 11E', 11X sukzessive eingeschränkt wird.

### BEZUGSZEICHENLISTE

- 1: Fahrzeug
- 2: Navigationssystem
- 3: Datenspeicher
- 4: Anzeigefläche
- 5: Berührungsempfindliche Oberfläche
- 6: Bedienelement
- 7: Steuereinheit
- 8: Landkarte
- 9: Textliste
- 10: Bildlaufleiste
- 11A - 11E: Objekte
- 11A' - 11E': Objekte (Teilmenge)
- 12: Finger des Nutzers
- 13: Auswahlposition

## Patentansprüche

1. Verfahren zum Bereitstellen einer Nutzerschnittstelle, bei dem
- eine Menge von datentechnisch gespeicherten Objekten (11A - 11E, 11A' - 11E', 11X) als Suchergebnisse ermittelt wird,
- die Menge von Objekten (11A - 11E, 11A' - 11E', 11X) in einer sequentiellen Liste (9) angezeigt wird, und
- die Objekte (11A - 11E, 11A' - 11E', 11X) zusätzlich zu der sequentiellen Liste (9) in einer graphischen Darstellung (8) angezeigt werden, wobei den Objekten (11A - 11E, 11A' - 11E', 11X) jeweils eine Position in der graphischen Darstellung (8) zugeordnet wird, in Abhängigkeit derer die Objekte (11A - 11E, 11A' - 11E', 11X) in der graphischen Darstellung (8) angezeigt werden, wobei
- anschließend an das Anzeigen der Objekte (11A - 11E, 11A' - 11E', 11X) in der sequentiellen Liste (9) und in der graphischen Darstellung (8) durch eine erste Bedienaktion eine Position (13) in der graphischen Darstellung (8) ausgewählt wird und
- in Abhängigkeit von der in der graphischen Darstellung (8) ausgewählten Position (13) eine Teilmenge (11A' - 11E') aus der angezeigten Menge der Objekte (11A - 11E, 11A' - 11E', 11X) in der sequentiellen Liste (9) ausgewählt wird, **dadurch gekennzeichnet, dass**
- den Positionen in der graphischen Darstellung (8) eine Metrik zugeordnet wird, sodass zwischen zwei Positionen ein Abstandsmaß ermittelbar ist, und
- ein Objekt (11A - 11E, 11A' - 11E', 11X) in Abhängigkeit von dem Abstandsmaß zwischen der zum jeweiligen Objekt (11A - 11E, 11A' - 11E', 11X) gehörigen Position und der ausgewählten Position (13) in die Teilmenge (11A' - 11E') aufgenommen wird, wobei ein Objekt (11A - 11 E, 11A' - 11E', 11X) in die Teilmenge (11A' - 11E) aufgenommen wird, wenn das Abstandsmaß kleiner als ein vorgegebener Grenzwert ist, wobei die Teilmenge (11A' - 11E') auf einen Bereich um die ausgewählte Position (13) eingeschränkt wird.

2. Verfahren nach Anspruch 1,
**dadurch gekennzeichnet,**
**dass** die Objekte (11A - 11E, 11A' - 11E', 11X) in aufsteigender Reihenfolge des Abstandsmaßes zwischen der Position des Objekts (11A - 11E, 11A' - 11E', 11X) und der ausgewählten Position (13) in die Teilmenge (11A' - 11E') aufgenommen werden, bis eine vorgegebene Anzahl erreicht wird.

3. Verfahren nach Anspruch 1, **dadurch gekennzeichnet,**
**dass** die sequentielle Liste (9) nach der Auswahl der Teilmenge (11A'- 11E') alphabetisch sortiert angezeigt wird.

4. Verfahren nach einem der vorangegangenen Ansprüche,
**dadurch gekennzeichnet,**
**dass** der Darstellungsmaßstab der graphischen Darstellung (8) automatisch an die Teilmenge der Objekte (11A' - 11E') angepasst wird.

5. Verfahren nach einem der vorangegangenen Ansprüche,
**dadurch gekennzeichnet,**
**dass**, nachdem durch die erste Bedienaktion in der graphischen Darstellung (8) eine Position (13) ausgewählt wurde, in der sequentiellen Liste (9) durch eine zweite Bedienaktion ein angezeigtes Objekt (11E') der Teilmenge ausgewählt wird.

6. Verfahren nach einem der vorangegangenen Ansprüche,
**dadurch gekennzeichnet, dass**
die Objekte (11A - 11E, 11A' - 11E', 11X) Navigationsziele eines Navigationssystems (2) oder Auswahlobjekte einer Infotainmentanwendung in einem Fahrzeug (1) sind.

7. Verfahren nach Anspruch 6,
**dadurch gekennzeichnet,**
**dass** das Abstandsmaß eine Distanz und/oder eine berechnete Fahrzeit umfasst.

8. Verfahren nach einem der vorangegangenen Ansprüche,
**dadurch gekennzeichnet, dass**
- die graphische Darstellung (8) und/oder die sequentielle Liste (9) auf einer berührungsempfindlichen Anzeigefläche (4, 5) dargestellt werden und
- die erste und/oder die zweite Bedienaktion durch Berühren der Anzeigefläche (4, 5) in dem Bereich ausgeführt wird, in welchem jeweils die graphische Darstellung (8) oder die sequentielle Liste (9) angezeigt wird.

9. Vorrichtung (3, 4, 5, 6, 7) zum Bereitstellen einer Nutzerschnittstelle, umfassend
- einen Datenspeicher (3) zum Speichern einer Menge von als Suchergebnisse ermittelten Objekten (11A - 11E, 11A' - 11E', 11X),
- eine Anzeigefläche (4) zum Anzeigen graphischer Darstellungen (8) und sequentieller Listen (9),
- Eingabemittel (5, 6) zum Erfassen einer Bedienaktion zur Auswahl einer Position (13) auf der Anzeigefläche (4) und
- eine Steuereinheit (7), die mit dem Datenspeicher (3), der Anzeigefläche (4) und den Eingabemitteln (5, 6) verbunden ist, wobei
- die Steuereinheit (7) dazu eingerichtet ist, die Anzeigefläche (4) zum Anzeigen der Objekte (11A - 11E, 11A' - 11E', 11X) in einer sequentiellen Liste (9) und zusätzlich in einer graphischen Darstellung (8) anzusteuern und
- anschließend die Eingabemittel (5, 6) zum Erfassen der Bedienaktion anzusteuern, wobei
- mittels der Steuereinheit (7) den Objekten (11A - 11E, 11A' - 11E', 11X) jeweils eine Position in der graphischen Darstellung (8) zuordenbar ist, in Abhängigkeit derer die Objekte (11A - 11E, 11A' - 11E', 11X) in der graphischen Darstellung (8) anzeigbar sind, und in Abhängigkeit von der ausgewählten Position (13) eine Teilmenge (11A'-11E') aus der angezeigten Menge der Objekte (11A - 11E, 11A' - 11E', 11X) in der sequentiellen Liste (9) auswählbar ist, **dadurch gekennzeichnet, dass** mittels der Steuereinheit (7)
- den Positionen in der graphischen Darstellung (8) eine Metrik zuordenbar ist, sodass zwischen zwei Positionen ein Abstandsmaß ermittelbar ist, und
- ein Objekt (11A - 11E, 11A' - 11E', 11X) in Abhängigkeit von dem Abstandsmaß zwischen der zum jeweiligen Objekt (11A - 11E, 11A' - 11E', 11X) gehörigen Position und der ausgewählten Position (13) in die Teilmenge (11A' - 11E') aufnehmbar ist, wobei ein Objekt (11A - 11E, 11A' - 11E', 11X) in die Teilmenge (11A' - 11E') aufnehmbar ist, wenn das Abstandsmaß kleiner als ein vorgegebener Grenzwert ist, wobei die Teilmenge (11A' - 11E') auf einen Bereich um die ausgewählte Position (13) eingeschränkt wird.

10. Vorrichtung nach Anspruch 9,
**dadurch gekennzeichnet,**
**dass** die Objekte (11A - 11E, 11A' - 11E', 11X) in aufsteigender Reihenfolge des Abstandsmaßes zwischen der Position des Objekts (11A - 11E, 11A' - 11E', 11X) und der ausgewählten Position (13) in die Teilmenge (11A' - 11E') aufnehmbar sind, bis eine vorgegebene Anzahl erreicht wird.

## Claims

1. Method for providing a user interface, in which
- a set of objects (11A-11E, 11A'-11E', 11X) stored in the form of data is determined as search results,
- the set of objects (11A-11E, 11A'-11E', 11X) is displayed in a sequential list (9), and
- the objects (11A-11E, 11A'-11E', 11X) are displayed in a graphical presentation (8) in addition to the sequential list (9), wherein the objects (11A-11E, 11A'-11E', 11X) are in each case allocated a position in the graphical presentation (8), in dependence of which position the objects (11A-11E, 11A'-11E', 11X) are displayed in the graphical presentation (8), wherein
- after the objects (11A-11E, 11A'-11E', 11X) have been displayed in the sequential list (9) and in the graphical presentation (8),
a position (13) in the graphical presentation (8) is selected by a first operating action, and
- in dependence on the selected position (13) in the graphical presentation (8), a subset (11A'-11E') from the displayed set of the objects (11A-11E, 11A'-11E', 11X) is selected in the sequential list (9),
**characterized in that**
- a metric is allocated to the positions in the graphical presentation (8) so that a measure of distance can be determined between two positions, and
- an object (11A-11E, 11A'-11E', 11X) is included in the subset (11A'-11E') in dependence on the measure of distance between the position belonging to the respective object (11A-11E, 11A'-11E', 11X) and the selected position (13), wherein an object (11A-11E, 11A'-11E', 11X) is included in the subset (11A'-11E') when the measure of distance is smaller than a predetermined limit value, wherein the subset (11A'-11E') is restricted to an area around the selected position (13).

2. Method according to Claim 1,
**characterized in that**
the objects (11A-11E, 11A'-11E', 11X) are included in the subset (11A'-11E') in ascending order of the measure of distance between the position of the object (11A-11E, 11A'-11E', 11X) and the selected position (13) until a predetermined number is reached.

3. Method according to Claim 1,
**characterized in that**
the sequential list (9) is displayed sorted alphabetically after the selection of the subset (11A'-11E').

4. Method according to one of the preceding claims, **characterized in that**
the scale of presentation of the graphical presentation (8) is adapted automatically to the subset of the objects (11A'-11E').

5. Method according to one of the preceding claims, **characterized in that**,
after a position (13) has been selected in the graphical presentation (8) by the first operating action, a displayed object (11E') of the subset is selected in the sequential list (9) by a second operating action.

6. Method according to one of the preceding claims, **characterized in that**
the objects (11A-11E, 11A'-11E', 11X) are navigation destinations of a navigation system (2) or selection objects of an infotainment application in a vehicle (1).

7. Method according to Claim 6,
**characterized in that**
the measure of distance comprises a distance and/or a calculated travelling time.

8. Method according to one of the preceding claims, **characterized in that**
- the graphical presentation (8) and/or the sequential list (9) are presented on a touch-sensitive display surface (4, 5) and
- the first and/or the second operating action is carried out by touching the display surface (4, 5) in the area in which the graphical presentation (8) or the sequential list (9) is displayed in each case.

9. Apparatus (3, 4, 5, 6, 7) for providing a user interface comprising
- a data memory (3) for storing a set of objects (11A-11E, 11A'-11E', 11X) that have been determined as search results,
- a display surface (4) for displaying graphical presentations (8) and sequential lists (9),
- input means (5, 6) for detecting an operating action for selecting a position (13) on the display surface (4) and
- a control unit (7) which is connected to the data memory (3), the display surface (4) and the input means (5, 6), wherein
- the control unit (7) is configured to actuate the display surface (4) for displaying the objects (11A-11E, 11A'-11E', 11X) in a sequential list (9) and additionally in a graphical presentation (8) and
- to subsequently actuate the input means (5, 6) for detecting the operating action, wherein
- the objects (11A-11E, 11A'-11E', 11X) can be allocated in each case a position in a graphical presentation (8), by means of the control unit (7), in dependence on which position the objects (11A-11E, 11A'-11E', 11X) can be displayed in the graphical presentation (8), and a subset (11A'-11E') from the displayed set of the objects (11A-11E, 11A'-11E', 11X) can be selected in the sequential list (9) in dependence on the selected position (13),
**characterized in that**
by means of the control unit (7)
- a metric can be allocated to the positions in the graphical presentation (8) so that a measure of distance can be determined between two positions, and
- an object (11A-11E, 11A'-11E', 11X) can be included in the subset (11A'-11E') in dependence on the measure of distance between the position belonging to the respective object (11A-11E, 11A'-11E', 11X) and the selected position (13), wherein an object (11A-11E, 11A'-11E', 11X) can be included in the subset (11A'-11E') when the measure of distance is smaller than a predetermined limit value, wherein the subset (11A'-11E') is restricted to an area around the selected position (13).

10. Apparatus according to Claim 9,
**characterized in that**
- the objects (11A-11E, 11A'-11E', 11X) can be included in the subset (11A'-11E') in ascending order of the measure of distance between the position of the object (11A-11E, 11A'-11E', 11X) and the selected position (13) until a predetermined number is reached.

## Revendications

1. Procédé de fourniture d'une interface utilisateur dans lequel
- un ensemble d'objets (11A-11E, 11A'-11E', 11X) mémorisés par une technique informatique est déterminé en tant que résultats de recherche,
- l'ensemble d'objets (11A-11E, 11A'-11E', 11X) est affiché dans une liste séquentielle (9) et
- les objets (11A-11E, 11A-11E', 11X) sont affichés dans une représentation graphique (8) en plus de la liste séquentielle (9), les objets (11A-11E, 11A'-11E', 11X) étant associés chacun à une position dans la représentation graphique (8) en fonction de laquelle les objets (11A-11E, 11A'- 11E', 11X) sont affichés dans la représentation graphique (8),
- après avoir affiché les objets (11A-11E, 11A'-11E', 11X) dans la liste séquentielle (9) et dans la représentation graphique (8), une position (13) dans la représentation graphique (8) étant sélectionnée par une première action de commande et
- un sous-ensemble (11A'-11E') de l'ensemble affiché des objets (11A-11E, 11A'-11E', 11X) étant sélectionné dans la liste séquentielle (9) en fonction de la position (13) sélectionnée dans la représentation graphique (8), **caractérisé en ce que**
- une métrique est associée aux positions dans la représentation graphique (8) de manière à pouvoir déterminer une mesure de distance entre deux positions, et
- un objet (11A-11E, 11A'-11E', 11X) est reçu dans le sous-ensemble (11A'-11E') en fonction de la mesure de distance entre la position associée à l'objet respectif (11A-11E, 11A'-11E', 11X) et la position sélectionnée (13), un objet (11A-11E, 11A'-11E', 11X) étant reçu dans le sous-ensemble (11A'-11E') lorsque la mesure de distance est inférieure à une valeur limite prédéterminée, le sous-ensemble (11A'-11E') étant limité à une région autour de la position (13).

2. Procédé selon la revendication 1,
**caractérisé en ce que**
les objets (11A-11E, 11A'-11E', 11X) sont reçus dans le sous-ensemble (11A'-11E') dans l'ordre croissant de la mesure de distance entre la position de l'objet (11A-11E, 11A'-11E', 11X) et la position sélectionnée (13) jusqu'à atteindre un nombre prédéterminé.

3. Procédé selon la revendication 1,
**caractérisé en ce que**
la liste séquentielle (9) est représentée de manière triée par ordre alphabétique après avoir sélectionné le sous-ensemble (11A'-11E').

4. Procédé selon l'une des revendications précédentes,
**caractérisé en ce que**
l'échelle de représentation de la représentation graphique (8) est automatiquement adaptée au sous-ensemble des objets (11A'-11E').

5. Procédé selon l'une des revendications précédentes,
**caractérisé en ce que**
après qu'une position (13) a été sélectionnée dans la représentation graphique (8) par la première action de commande, un objet affiché (11E') du sous-ensemble est sélectionné dans la liste séquentielle (9) par une deuxième action de commande.

6. Procédé selon l'une des revendications précédentes,
**caractérisé en ce que**
les objets (11A-11E, 11A'-11E', 11X) sont des cibles de navigation d'un système de navigation (2) ou des objets de sélection d'une application d'information et de divertissement dans un véhicule (1).

7. Procédé selon la revendication 6,
**caractérisé en ce que**
la mesure de distance comprend une distance et/ou un temps de trajet calculé.

8. Procédé selon l'une des revendications précédentes,
**caractérisé en ce que**
- la représentation graphique (8) et/ou la liste séquentielle (9) sont présentées sur une surface d'affichage tactile (4, 5) et
- la première et/ou la deuxième action de commande est effectuée par contact de la surface d'affichage (4, 5) dans la région dans laquelle la représentation graphique (8) ou la liste séquentielle (9) est affichée.

9. Dispositif (3, 4, 5, 6, 7) destiné à fournir une interface d'utilisateur, comprenant
- une mémoire de données (3) destinée à mémoriser un ensemble d'objets (11A-11E, 11A'-11E', 11X) déterminés comme résultats de recherche,
- une surface d'affichage (4) destinée à afficher des représentations graphiques (8) et des listes séquentielles (9),
- des moyens d'entrée (5, 6) destinés à détecter une action de commande destinée à sélectionner une position (13) sur la surface d'affichage (4) et
- une unité de commande (7) qui est reliée à la mémoire de données (3), à la surface d'affichage (4) et aux moyens d'entrée (5, 6),
- l'unité de commande (7) étant adaptée pour commander la surface d'affichage (4) destinée à afficher les objets (11A-11E, 11A'-11E', 11X) dans une liste séquentielle (9) et en plus une représentation graphique (8) et
- pour commander ensuite les moyens d'entrée (5, 6) destinés à détecter l'action de commande,
- une position dans la représentation graphique (8) pouvant être associée aux objets (11A-11E, 11A'-11E', 11X) au moyen de l'unité de commande (7), les objets (11A-11E, 11A'-11E', 11X) pouvant être affichés dans la représentation graphique (8) en fonction de cette position et un sous-ensemble (11A'-11E') de l'ensemble affiché des objets (11A-11E, 11A'-11E', 11X) pouvant être sélectionné dans la liste séquentielle (9) en fonction de la position sélectionnée (13),
**caractérisé en ce qu'**au moyen de l'unité de commande (7)
- une métrique peut être associée aux positions dans la représentation graphique (8) de sorte qu'une mesure de distance puisse être déterminée entre deux positions, et
- un objet (11A-11E, 11A'-11E', 11X) peut être reçu dans le sous-ensemble (11A'-11E') en fonction de la mesure de distance entre la position associée à l'objet respectif (11A-11E, 11A'-11E', 11X) et la position sélectionnée (13), un objet (11A-11E, 11A'-11E', 11X) pouvant être reçu dans un sous-ensemble (11A'-11E') si la mesure de distance est inférieure à une valeur limite prédéterminée, le sous-ensemble (11A'-11E') étant limité à une région située autour de la position sélectionnée (13).

10. Dispositif selon la revendication 9,
**caractérisé en ce que**
les objets (11A-11E, 11A'-11E', 11X) peuvent être reçus dans le sous-ensemble (11A'-11E') dans l'ordre croissant de la mesure de distance entre la position de l'objet (11A-11E, 11A'-11E', 11X) et la position sélectionnée (13) jusqu'à atteindre un nombre prédéterminé.
